# DEMANDE DE BREVET EUROPEEN

(11) **EP 4 741 877 A1**
(43) Date de publication de la demande: **13.05.2026**
(21) Numéro de dépôt: 25213852.4
(22) Date de dépôt: 06.11.2025
(51) Int. Cl.: G01S 13/72, G01S 13/24, G01S 13/30, G01S 13/02

(54) **PROCÉDÉ DE FONCTIONNEMENT D'UN RADAR DE DÉTECTION DE CIBLES ET RADAR DE DÉTECTION ASSOCIÉ**

(30) Priorité: 07.11.2024 FR 2412182
(71) Demandeur: THALES, 92190 Meudon (FR)
(72) Inventeur: GOY, Philippe, 33700 MERIGNAC (FR); COTTRON, Rodolphe, 33700 MERIGNAC (FR); VEYRAC, Yoan, 33700 MERIGNAC (FR)
(74) Mandataire: Lavoix

(57) **Abrégé**

La présente invention concerne un procédé de fonctionnement d'un radar de détection de cibles, comprenant les étapes suivantes :
- détermination (140) dans un cône de visibilité d'une pluralité de pistes actives, chaque piste active présentant une cible à poursuivre ;
- pour chaque piste active, détermination (150) d'une forme d'onde permettant sa détection et poursuite ;
- détermination (160) de compatibilité des pistes actives en comparant les formes d'onde déterminées pour ces pistes pour former au moins un ensemble de pistes actives compatibles ;
- pour le ou chaque ensemble de pistes actives compatibles, émission/réception (110) d'une onde communalisée comprenant des impulsions consécutives, chaque impulsion étant associée à l'une des pistes actives dudit ensemble.

## Description

La présente invention concerne un procédé de fonctionnement d'un radar de détection de cibles.

La présente invention concerne également un radar de détection mettant en œuvre un tel procédé.

Le domaine technique de l'invention est celui des systèmes radar embarqués par exemple à bord des aéronefs, des bateaux, des sous-marins ou des satellites, mettant en œuvre une détection/identification de cibles.

La problématique générale résolue par l'invention est la gestion du budget temps en regard de la demande croissante de nouvelles fonctionnalités de détection et d'identification demandées aux systèmes radar.

De manière traditionnelle, un système radar peut être employé de manière « mono-tâche », c'est-à-dire un seul « mode » de fonctionnement tout au long de la mission, par exemple lors de l'emploi d'un mode de surveillance maritime adapté à une altitude et un type de cible donné.

En particulier, dans un mode « mono-tâche », le radar emploie une logique de balayage de l'espace qui ne varie pas dans le temps, tant que l'opérateur ne change pas de mission ou de mode. Le budget temps est alors associé uniquement à cette tâche.

Depuis de nombreuses années, les opérateurs radar cherchent à agrandir le spectre d'emploi des systèmes de détection radar et demandent à ce qu'ils deviennent « multitâches ». Par exemple avoir simultanément une situation tactique maritime, aérienne et éventuellement avoir un retour des conditions météo. Le système doit alors définir le budget temps à allouer à chacune des tâches à mener.

Evidemment, plus une tâche a de temps alloué, plus elle sera efficace (meilleure capacité de détection ou de discrimination par exemple). La gestion et l'optimisation du budget temps apparaissent donc cruciales pour les nouveaux systèmes radar.

Traditionnellement, le radar emploie des stratégies d'entrelacement « temps court » (à l'échelle du bloc de traitement) ou « temps long » (à l'échelle d'un scan) pour mener à bien ses différentes tâches. Un budget temps est alloué à chacune de ces tâches à partir d'un compromis de performances de chacune des fonctions prises individuellement (temps de rafraîchissement, portée de détection, etc.)

L'entrelacement de blocs radar est alors une technique qui ordonnance temporellement des tâches qui ne sont pas simultanées.

Pour obtenir des tâches simultanées, la façon de procéder connue de l'homme de l'art consiste à décomposer le système antennaire du radar en plusieurs sous-réseaux et d'allouer une tâche à chacun des sous-réseaux pour effectuer ce que l'on appelle de l'émission colorée. On retrouve ce fonctionnement principalement dans les systèmes radar de type MIMO (de l'anglais « Multiple Input Multiple Output »). L'émission simultanée de plusieurs formes d'onde orthogonales est ainsi réalisée pour colorer l'espace, c'est-à-dire associer un couple {sous-réseau, forme d'onde} à une direction {azimut-élévation}. L'émission colorée permet soit d'obtenir une vision complète de l'environnement en augmentant drastiquement le temps de rafraichissement d'une tâche, soit d'effectuer plusieurs tâches simultanément.

Toutefois, cette décomposition de l'espace antennaire en sous-réseaux et l'émission colorée ne sont pas nécessairement disponibles ou souhaitables en termes de bilan à architecture radar donnée.

Une poursuite active est une fonction radar qui consiste à assurer une visibilité et une détectabilité optimales d'une cible pistée en jouant des éclairements dédiés en direction de la cible, avec une ou des formes d'onde calculées pour optimiser la visibilité dans la zone (distance, vitesse) où est localisée la piste. En poursuite active, une évaluation d'une surface radar équivalente estimée (appelée également SER de l'anglais « Surface Equivalente Radar ») et de la distance de la cible est disponible.

En règle générale, on conçoit les formes d'onde Doppler de poursuite active en choisissant la ou les fréquences de répétition Fr, la ou les longueurs d'onde *λ* associées, ainsi que le nombre de récurrences par Fr pour minimiser le budget temps associé tout en conservant un Rapport Signal à Bruit (RSB) très confortable pour détecter la cible. Un tel algorithme nommé { *λ*, Fr} est connu de l'homme de l'art.

Un ordonnanceur radar intègre alors les tâches de poursuite active en regard des priorités relatives vis-à-vis des pointages de veille et des tâches de maintenance.

Un budget temps, fixe ou dynamique, est alloué aux tâches de poursuite active, limitant soit en pratique le nombre de pistes actives, soit la capacité de veille à être maintenue, en fonction du compromis recherché : maintien impératif de la veille au détriment de la poursuite active ou maintien impératif de la poursuite active au détriment de la veille. L'optimisation du budget temps alloué à la poursuite active présente donc un problème important dans la gestion du budget radar.

La présente invention a pour but de répondre à ce problème et de proposer donc des moyens permettant d'optimiser le budget temps alloué à la poursuite active.

À cet effet, l'invention a pour objectif un procédé de fonctionnement d'un radar de détection de cibles, le radar de détection mettant en œuvre un balayage formant un cône de visibilité ;
le procédé comprenant les étapes suivantes :
- détermination dans le cône de visibilité d'une pluralité de pistes actives, chaque piste active présentant une cible à poursuivre ;
- pour chaque piste active, détermination d'une forme d'onde permettant sa détection et poursuite ;
- détermination de compatibilité des pistes actives en comparant les formes d'onde déterminées pour ces pistes pour former au moins un ensemble de pistes actives compatibles ;
- pour le ou chaque ensemble de pistes actives compatibles, émission/réception d'une onde communalisée comprenant des impulsions consécutives, chaque impulsion étant associée à l'une des pistes actives dudit ensemble.

Suivant d'autres aspects avantageux de l'invention, le procédé comprend une ou plusieurs des caractéristiques suivantes, prises isolément ou suivant toutes les combinaisons techniquement possibles :
- le procédé comprenant en outre pour chaque piste active n'appartenant à aucun ensemble de pistes actives compatibles, émission/réception d'une onde simple comprenant une seule impulsion ;
- chaque forme d'onde définit un domaine de visibilité d'une onde ayant cette forme ;
- chaque domaine de visibilité comprend un domaine en distance et un domaine en vitesse d'une piste active ;
- deux pistes actives sont compatibles lorsqu'elles se trouvent dans un même domaine de visibilité avec une probabilité supérieure à un seuil prédéterminé ;
- chaque forme d'onde est définie par une longueur d'onde, respectivement une fréquence d'émission, et une fréquence de répétition d'une onde ayant cette forme ;
- la compatibilité des pistes actives est vérifiée en testant différentes valeurs de longueur d'onde et/ou de fréquence de répétition ;
- la compatibilité des pistes actives est déterminée pour chaque couple de pistes actives ;
- les impulsions d'une même onde communalisée sont associées à des directions différentes d'émission ;
- chaque n-ième récurrence de l'étape d'émission/réception des ondes communalisées comprend les sous-étapes suivantes :
   + génération d'au moins deux impulsions consécutives associées à des pistes actives différentes d'un même ensemble de pistes actives compatibles ;
   + émission des impulsions dans des bandes fréquentielles différentes ;
   + réception dans une fenêtre temporelle commune des échos des impulsions ;
- chaque impulsion est émise avec une phase aléatoire associée à la bande fréquentielle correspondante ;
- la sous-étape de la réception comprend la compensation du déphasage des échos reçus dans chaque bande fréquentielle, par la phase aléatoire associée à cette bande fréquentielle ;
- lors de la sous-étape d'émission, les impulsions correspondantes sont émises en utilisant des pentes différentes de chirps utilisés pour les émettre ;
- lors de la sous-étape de réception, des échos associés à des pointages de pistage actif différents sont distingués en déterminant les pentes des chirps correspondants ;
- lors de la sous-étape d'émission, les impulsions correspondantes sont émises en utilisant des polarisations différentes ;
- lors de la sous-étape de réception, des échos associés à des pointages de pistage actif différents sont distingués en déterminant leurs polarisations ;
- une polarisation est émise pour chaque impulsion ou un ensemble de polarisations formant une signature est émise pour chaque impulsion.

L'invention a également pour objet un radar de détection de cibles comprenant des moyens techniques configurés pour mettre en œuvre le procédé tel que défini ci-dessus.

L'invention apparaîtra plus clairement à la lecture de la description qui va suivre, donnée uniquement à titre d'exemple non limitatif, et faite en référence aux dessins dans lesquels :
- [Fig. 1] la figure 1 est une vue schématique d'un radar de détection selon l'invention ;
- [Fig. 2] la figure 2 est un organigramme d'un procédé de fonctionnement du radar de la figure 1 ;
- [Fig. 3] [Fig. 4] [Fig. 5] les figures 3 à 5 sont différentes vues illustrant la mise en œuvre du procédé de la figure 2.

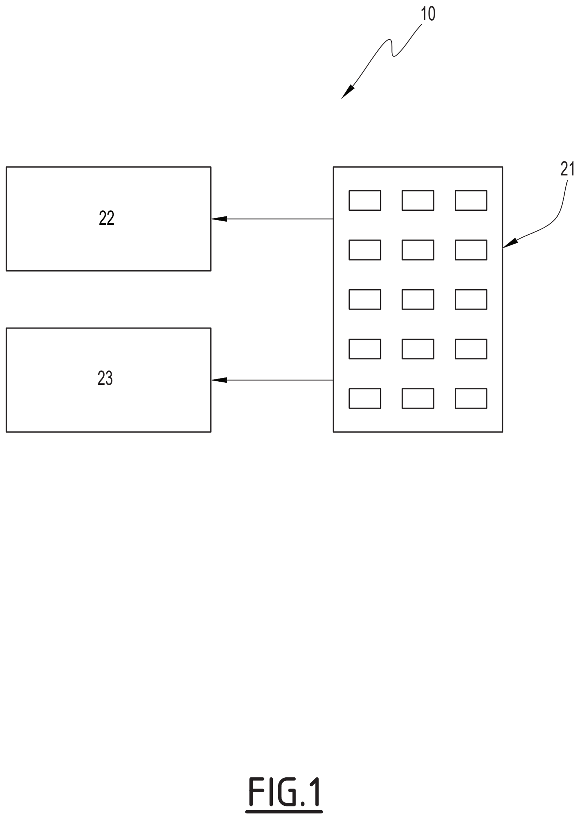

La figure 1 illustre un radar de détection 10 selon l'invention. Ce radar 10 est destiné par exemple à être embarqué sur un porteur mobile se déplaçant dans l'air et/ou sur une surface terrestre et/ou sur une surface maritime. Avantageusement, le radar 10 est destiné à être embarqué sur un porteur se déplaçant dans l'air, tel qu'un aéronef. Alternativement, le radar 10 est disposé de manière fixe.

Le radar 10 permet de détecter des cibles suivant un mode ou plusieurs modes de veille. Par « mode de veille », on entend un mode d'observation qui est constitué de pointages réguliers. Un exemple d'un tel mode est un mode Doppler de type MMTI (de l'anglais « Maritime Moving Target Indicator »), GMTI (de l'anglais « Ground Moving Target Indicator »), AMTI (de l'anglais « Aerial Moving Targets »), etc.

En référence à la figure 1, le radar 10 comprend un réseau d'antennes élémentaires 21 permettant d'émettre des signaux sous la forme d'impulsions et de recevoir des signaux correspondant à des échos de ces impulsions.

Le radar 10 comprend en outre une unité d'émission 22 permettant de générer les impulsions à émettre par le réseau d'antennes 21 et une unité de réception 23 permettant de traiter les échos reçus par le réseau d'antennes 21 afin d'en déduire la présence d'une cible et éventuellement, une vitesse et une distance jusqu'à cette cible.

Chacune des unités 22, 23 est réalisée par exemple sous la forme d'un circuit programmable de type FPGA (de l'anglais « Field Programmable Gate Array ») et/ou de type ASIC (de l'anglais « Application-Specific Integrated Circuit »). En complément ou en variante, chacune de ces unités 22, 23 est réalisée au moins partiellement sous la forme d'un logiciel exécutable par un processeur et stocké dans une mémoire.

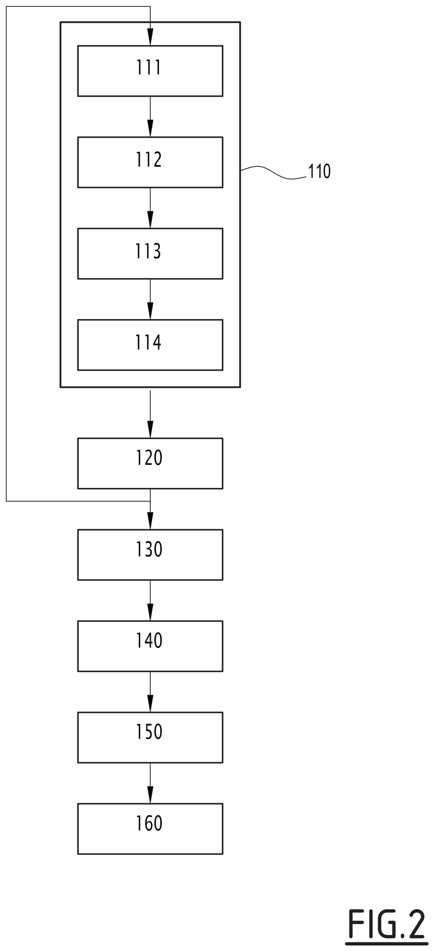

Le procédé de fonctionnement du radar 10 sera désormais expliqué en référence à la figure 2 présentant un organigramme de ses étapes.

Il est considéré que ce procédé est mis en œuvre lors d'un balayage électronique de l'espace autour du radar 10. En particulier, ce procédé comprend la mise en œuvre itérative au moins des étapes 110 et 120 décrites ci-dessous pour chaque position de pointage du radar 10. Chaque itération de ces étapes est appelée récurrence.

Il est considéré en outre que les positions de pointage se succèdent selon un sens de rotation prédéterminé et définissent toutes une ouverture angulaire dépendante de l'angle de dépointage connue de l'homme de l'art. L'ensemble des positions de pointage définissent un cône de visibilité disponible du radar 10. Autrement dit, par « cône de visibilité », on entend l'ensemble des positions de pointage différentes lors d'un tour de balayage effectué par le radar 10.

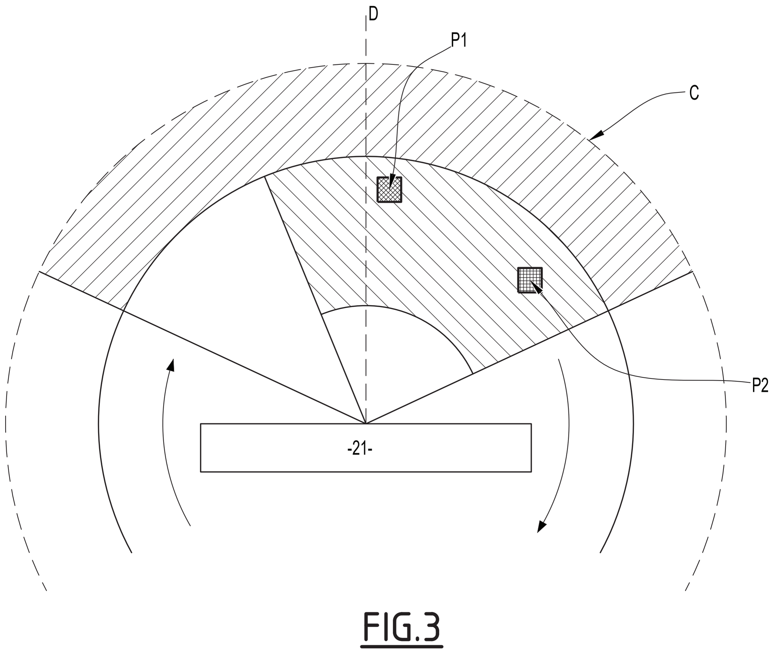

La figure 3 illustre un tel cône de visibilité C. Dans l'exemple de cette figure, le cône de visibilité C est formé par les angles +65° et -65° par rapport à la direction normale D au réseau d'antennes 21. Ainsi, ce cône de visibilité C forme un angle d'ouverture de 130°. Pour couvrir un angle d'ouverture plus important, par exemple, un angle d'ouverture de 360° (c'est-à-dire former un tour complet dans l'espace), un panneau antennaire recevant le réseau d'antennes 21 peut être monté sur un piédestal mécanique.

La rotation mécanique du piédestal permet de modifier la position du cône de visibilité du panneau, de manière continue. Cette rotation mécanique permet à l'antenne de couvrir un domaine angulaire de 360°, par exemple. Dans cette architecture, le balayage électronique en azimut permet de jouer des pointages radar en « avance » ou en « retard » par rapport à la normale antenne afin d'accommoder les tâches radar séquencées par l'ordonnanceur.

Une deuxième solution pour couvrir 360° de visibilité avec un seul panneau consiste à remplacer le piédestal par un positionneur. Ce dernier positionne la normale antenne sur quelques valeurs angulaires, par exemple 90°+, -90° et 180° de sorte à ce que le balayage électronique du panneau soit suffisant pour couvrir toutes les positions.

Une fois positionné, le réseau d'antennes 21 balaye ainsi électroniquement son cône de visibilité, puis le positionneur se cale sur une nouvelle position (arrêt de l'émission) et le balayage électronique reprend jusqu'à couvrir toutes les positions.

Une dernière solution consiste à structurer autant de panneaux antennaires, fixes, de sorte que la somme de leurs cônes de visibilité permette de couvrir un domaine de 360°.

Le procédé décrit ci-dessous est adaptable sur chacune des architectures mentionnées.

À l'intérieur, le cône de visibilité définit une pluralité de domaines de visibilité parcourus successivement lors du balayage du radar 10.

Chaque domaine de visibilité correspond à une zone géographique dans laquelle une cible ayant une certaine vitesse est détectable par une onde envoyée depuis le radar 10. Ainsi, chaque domaine de visibilité est déterminé par une forme d'onde envoyée depuis le radar 10. En outre, chaque domaine de visibilité est défini par un domaine en distance mesurée à partir du radar 10 et un domaine en vitesse de la cible.

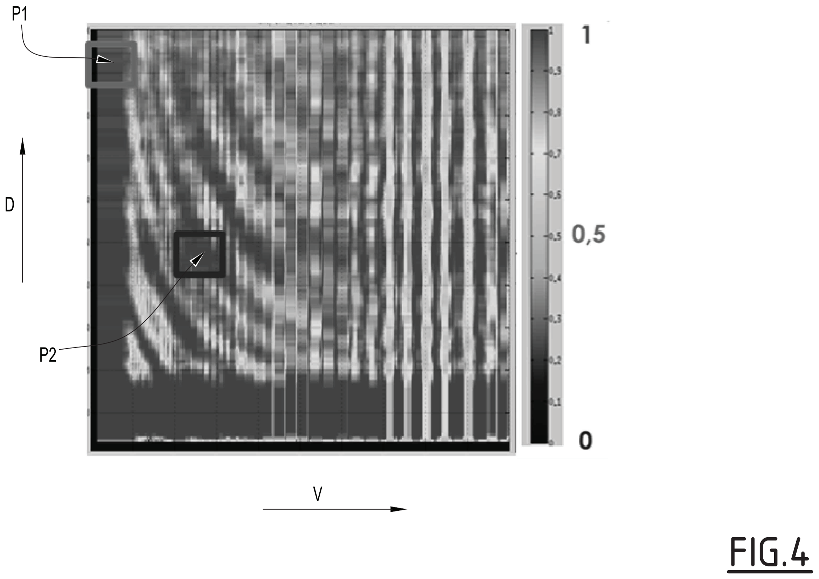

Autrement dit, comme cela est illustré sur la figure 4, chaque domaine de visibilité peut être défini par une probabilité qu'une cible se trouvant à une distance particulière du radar 10 et ayant une vitesse particulière soit détectée par une forme d'onde Doppler envoyée depuis le radar 10. La probabilité varie donc de 0 à 1.

Chaque forme d'onde est définie par une longueur d'onde λ et une fréquence de répétition Fr d'une onde ayant cette forme. Autrement dit, chaque forme d'onde est définie par un couple de valeurs {λ, Fr}.

En référence à la figure 1, chaque n-ième récurrence de l'étape 110 comprend une émission/réception de signaux dans la position de pointage correspondante.

En particulier, lors de cette étape, l'unité d'émission 22 du radar 10 émet des signaux ayant une forme d'onde particulière et l'unité de réception 23 reçoit des échos de ces signaux.

Cette étape 110 d'émission/réception de signaux comprend plusieurs sous-étapes dont la mise en œuvre dépend du type de signaux choisi. Ces sous-étapes seront expliquées en détail par la suite. Cette étape 110 comprend également un filtrage et un traitement de détection, comme cela sera expliqué par la suite.

Lors de chaque n-ième récurrence de l'étape suivante 120, le radar 10 et notamment l'unité de réception 23 de celui-ci mettent en œuvre une analyse des signaux reçus. En particulier, cette étape 120 comprend par exemple un traitement d'extraction de type « tour à tour » ou tout autre traitement permettant d'identifier des cibles dans un mode de veille.

Une cible est considérée comme détectée lorsqu'à l'issue de ce traitement, le radar 10 conclut qu'une telle cible est présente dans la zone considérée.

Une cible est considérée comme définitivement détectée lorsqu'après plusieurs mises en œuvre des étapes 110 et 120, au moins K détections sont présentes et corrèlent dans une même zone sur un horizon de N mises en œuvre de ces étapes. Dans cette notation, le nombre K signifie le nombre d'étapes 120 lors desquelles la cible était considérée comme détectée. Le coefficient K/N peut être alors comparé avec un seuil qui est appelé seuil d'extraction des cibles.

Lors de l'étape 130 suivante, mise en œuvre après plusieurs récurrences des étapes 110 et 120, une requête de poursuite d'une ou de plusieurs cibles considérées comme définitivement détectées lors de l'étape 120 est acquise, par exemple par l'unité de réception 23 du radar 10.

Une telle requête peut par exemple parvenir de la part d'un utilisateur ou d'un système externe connecté au radar 10.

La ou chaque cible pour laquelle une telle requête est parvenue est considérée comme une piste active et une poursuite active est donc mise en œuvre pour cette cible. Cette poursuite active comprend lors de l'étape 110, une émission/réception de signaux de forme d'onde particulière vers chaque piste active comme cela sera expliqué par la suite. En particulier, contrairement à un mode de veille, une poursuite active est constituée de pointages irréguliers. La poursuite active consiste à compléter le maillage de veille avec des pointages associés à des formes d'onde spécifiques, calculées à la volée. Ces pointages sont dédiés à détecter la cible pistée, contrairement au pointages de veille qui cherchent à détecter le maximum de cibles potentielles.

Lors de l'étape 140 suivante, l'unité d'émission 22 détermine une pluralité de pistes actives dans le cône de visibilité instantané, c'est-à-dire dans le cône de visibilité défini par le réseau d'antennes 21 sans prise en compte d'un éventuel balayage mécanique.

Cette pluralité de pistes actives correspond par exemple à l'ensemble des cibles pour lesquelles une requête de poursuite a été reçue lors de l'étape précédente.

Lors de l'étape 150 suivante, l'unité d'émission 22 détermine une forme d'onde pour chaque piste active. Comme indiqué précédemment, une telle forme d'onde est définie par un couple {λ, Fr}.

Pour ce faire, un algorithme de type {λ, Fr}, connu en soi, peut être mis en œuvre. Un tel algorithme permet en outre de conserver un Rapport Signal à Bruit (RSB) nécessaire pour détecter un plot et nourrir la piste active d'intérêt, tout en minimisant le temps d'éclairement nécessaire à cette détection. Pour cela, l'algorithme de type {λ, Fr} détermine en outre un nombre de récurrences Nrec compatible à la détection pour chaque piste active.

Lors de l'étape 160 suivante, l'unité d'émission 22 détermine la compatibilité des pistes actives identifiées lors de l'étape précédente.

Des pistes actives sont dites compatibles lorsqu'il existe une même forme d'onde, dite alors une forme d'onde compatible, qui peut être utilisée pour la poursuite de chacune de ces pistes actives. Autrement dit, des pistes actives sont compatibles lorsqu'elles se trouvent dans un même domaine de visibilité défini par la forme d'onde compatible correspondante, avec une probabilité supérieure à un seuil prédéterminé. Ce seuil peut par exemple être proche de 1. Il peut par exemple être sensiblement égale à 0,90 ou 0,95.

La figure 4 illustre un cas lorsque deux pistes actives, à savoir pistes actives P1 et P2, se trouvent dans un même domaine de visibilité avec une probabilité proche de 1. Ces pistes actives forment donc un ensemble de pistes compatibles.

Pour mettre en œuvre cette étape, selon un exemple de réalisation, l'unité d'émission 22 met en œuvre un test de compatibilité pour chaque couple de pistes actives compatibles déterminées lors de l'étape précédente. Par exemple, lorsque M pistes actives ont été déterminées lors de l'étape précédente, l'unité d'émission 22 met au plus Mx(M-1) tests de compatibilité.

Chaque test de compatibilité comprend alors une comparaison de deux couples {λ, Fr} définissant les formes d'onde déterminées pour les pistes actives correspondantes, afin de déterminer, si possible, un couple {λ, Fr} compatible avec les deux premiers couples. Ce dernier couple {λ, Fr} définit une forme d'onde compatible pour les deux pistes actives qui peuvent alors être considérées comme compatibles. Cette forme d'onde compatible peut éventuellement réduire le RSB initial en relation avec chaque piste. Ce RSB reste toutefois acceptable pour poursuivre les pistes actives correspondantes.

Lorsqu'une forme d'onde compatible a pu être déterminée par le test, les pistes actives correspondantes sont donc compatibles. Autrement, ces pistes sont incompatibles.

Selon un exemple de réalisation, le test de compatibilité est réalisé sur chaque valeur Fr choisie précédemment en croisant les valeurs λ définies pour chaque piste et en testant les positions {distance, vitesse} (c'est-à-dire le domaine de visibilité) de chaque piste. Une matrice de compatibilité est alors définie pour définir quelles pistes et quels couples {λ, Fr} (ou triplets {λ, Fr, Nrec}) sont associables ou non.

En particulier, avant la mise en œuvre d'un tel test de compatibilité, il est considéré que les triplets {λ, Fr, Nrec} sont calculés pour chaque piste. Puis, les valeurs λ sont croisées en prenant pour une première piste le triplet {λ1, Fr2, Nrec2} et pour une deuxième piste le triplet {λ2, Fr1, Nrec1}. Le triplet {λ2, Fr1, Nrec1} est compatible de la détection de la deuxième piste si :
- la probabilité de visibilité de la deuxième piste est satisfaisante avec la valeur Fr1 ;
- le RSB demandé pour la détection de la deuxième piste est satisfaisant avec la valeur Nrec1.

Puis, la comptabilité du triplet {λ1, Fr2, Nrec2} à la détection de la première piste est analysée de la même manière.

La matrice de compatibilité peut agréger deux ou trois notes.

Lorsque la matrice de compatibilité agrège deux notes, la première note est la compatibilité des deux valeurs λ entre elles. En particulier, pour mettre en œuvre la technique d'émission d'une onde communalisée telle qu'elle sera décrite ci-après, les valeurs λ doivent être suffisamment espacées pour accueillir les bandes émises, et suffisamment proches pour rester dans la bande instantanée du radar 10.

La seconde note est la note de visibilité de la piste active numéro n avec sa propre valeur λ et la valeur Fr correspondant à celle de la piste active numéro k.

Lorsque la matrice de compatibilité agrège trois notes, la troisième note signifie la compatibilité en termes de bilan de détection (RSB).

La recherche de λ est imposée, que l'on fonctionne à forme d'onde de vitesse ambiguë constante (*V_{amb} =* λ *x Fr* / 2) ou à distance ambiguë constante (*D_{amb}* = c x *Tr* / *2).*

Le principe de recherche fonctionne dans les deux cas.

Dans un exemple de réalisation, la recherche est réalisée en ne testant que les valeurs de λ déjà associées aux pistes. A contrario, il est possible d'effectuer une recherche plus complexe et coûteuse autour des λ compatibles de la cible numéro n à appliquer à la cible numéro k.

À l'issue de cette étape 160, au moins un ensemble de pistes compatibles est formé. Cet ensemble est constitué par exemple d'un couple de pistes actives compatibles. Par exemple, à l'issue de cette étape, K pistes actives sont considérées comme compatibles et K/2 couples de pistes compatibles entre elles sont formés.

Les autres pistes actives (c'est-à-dire M-K pistes actives) sont alors considérées comme incompatibles.

La compatibilité/incompatibilité de chaque piste active définit la manière de mise en œuvre de l'étape d'émission/réception 110 des signaux vers cette piste lors des prochaines occurrences des étapes 110 et 120.

En particulier, pour chaque piste active incompatible, cette étape 110 comprend une sous-étape 111 de génération d'une impulsion, une étape 112 d'émission de cette impulsion dans une bande fréquentielle correspondant à la forme d'onde déterminée pour cette piste active, une étape 113 de réception d'un écho de cette impulsion dans une fenêtre temporelle de durée prédéterminée et une sous-étape 114 de prétraitement des échos reçus comprenant par exemple un filtrage adapté et un traitement de détection adapté (par exemple en puissance ou en contraste).

Autrement dit, pour chaque piste active incompatible, cette étape 110 comprend une émission/réception d'une onde simple selon des techniques connues en soi.

Au contraire, pour chaque ensemble de pistes actives compatibles, cette étape 110 comprend une émission/réception d'une même onde communalisée.

Chaque onde communalisée comprend au moins deux impulsions consécutives associées à des pistes actives compatibles appartenant au même ensemble. Par exemple, chaque impulsion est associée à une direction d'émission correspondant à la piste active associée à cette impulsion.

Dans un tel cas, lors de la sous-étape 111, l'unité d'émission 22 du radar 10 génère des impulsions consécutives associées aux pistes actives compatibles. Par exemple, lors de cette sous-étape, au moins deux impulsions sont générées. En particulier, le nombre d'impulsions correspond au nombre de pistes actives compatibles correspondantes.

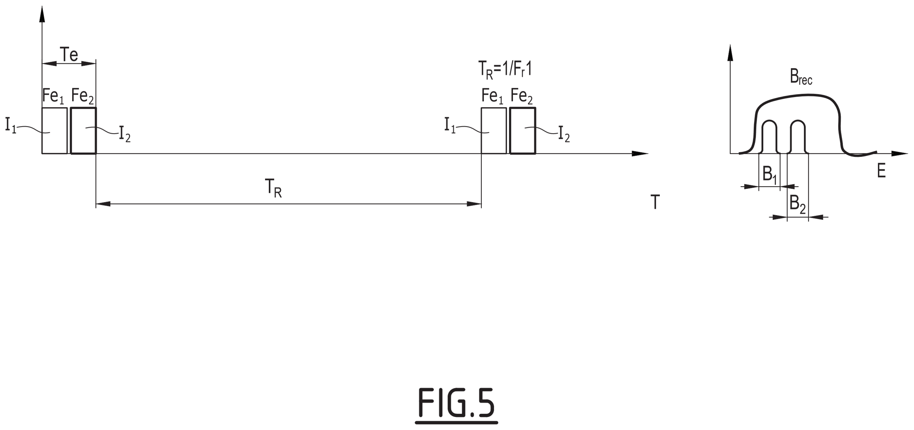

Selon cet exemple, l'unité d'émission 22 génère une première impulsion I₁ et une deuxième impulsion I₂, illustrées sur la figure 5.

Chaque impulsion est associée par exemple à une direction d'émission particulière. Cette direction d'émission peut être définie par exemple par un couple de valeurs angulaires. Ces valeurs angulaires correspondent par exemple à l'élévation (ou site) et à l'azimut d'émission, dénotées par la suite respectivement par EIᵢ et Azᵢ. Dans tout ce qui suit, l'indice i=1 désigne toute valeur relative à la première impulsion et i=2 désigne toute valeur relative à la deuxième impulsion.

Les impulsions sont générées dans une fenêtre d'émission Te dans laquelle chaque impulsion a une largeur Li et espacée de l'autre impulsion et de l'une des frontières de la fenêtre d'émission Te par un écart temporel T_{GAP}. Les largeurs d'impulsion Li sont choisies avantageusement identiques pour obtenir le même traitement de compression d'impulsion pour les deux cibles et le même gain de traitement.

Dans le domaine fréquentiel, les impulsions partagent un même support fréquentiel B_{rec}, avec un écart fréquentiel F_{GAP} entre les porteuses Fi correspondantes supérieur aux bandes fréquentielles Bi de ces impulsions. Ce support fréquentiel est défini par la forme d'onde compatible correspondant aux pistes actives compatibles. L'écart fréquentiel F_{GAP} est choisi suffisant pour distinguer les échos de ces impulsions à la réception. Dans tout ce qui suit, une bande fréquentielle est définie par une fréquence centrale et une largeur de bande. Avantageusement, dans la suite, toutes les bandes fréquentielles présentent une même largeur. En outre, l'écart fréquentiel F_{GAP} est mesuré entre un couple de fréquences centrales correspondantes et est supérieur à la largeur de chaque bande fréquentielle.

Les bandes fréquentielles B₁ et B₂ respectivement de la première impulsion I₁ et de la deuxième impulsion I₂ sont avantageusement choisies les mêmes pour chaque récurrence de l'étape 110. Ainsi, la même fréquence centrale Fe₁ et la même fréquence centrale Fe₂ sont choisies respectivement pour la première impulsion et pour la deuxième impulsion dans chaque récurrence de l'étape 110.

Ces valeurs Fe₁ et Fe₂ correspondent aux valeurs λ choisies pour les pistes actives compatibles respectives. En particulier, *λᵢ* = c/*Feᵢ* avec c célérité de la lumière. Ainsi, les fréquences d'émission Fe₁ et Fe₂ associées sont choisies suffisamment proches pour rentrer dans la bande de réception du radar 10 et suffisamment éloignées pour contenir sans chevauchement les bandes émises liées à chaque impulsion.

Lors de la sous-étape 112, l'unité d'émission 22 émet les impulsions générées lors de la sous-étape précédente dans les bandes fréquentielles correspondantes.

Lors de la sous-étape 113, l'unité de réception 23 reçoit des échos correspondant aux impulsions émises dans une fenêtre temporelle commune de réception. La durée Tr de cette fenêtre commune de réception est égale à la durée totale de la récurrence T_{R} (c'est-à-dire le temps d'observation du pointage correspondant pour une récurrence) moins la durée de la fenêtre d'émission Te. Lors de la réception, les échos correspondant aux impulsions différentes sont distingués par les bandes fréquentielles différentes, en utilisant par exemple des filtres passe-bande adaptés. Un filtrage spatial de type FFC peut également être appliqué dans la direction associée à ladite bande.

Lors de la sous-étape 114, l'unité de réception 23 effectue un prétraitement des échos reçus comprenant par exemple un filtrage adapté et un traitement de détection adapté (par exemple en puissance ou en contraste).

Les résultats d'un tel prétraitement sont utilisés comme des entrées de l'étape 120.

On conçoit alors que le procédé selon l'invention présente un certain nombre d'avantages.

En particulier, conformément au procédé selon l'invention, l'émission de signaux de type onde communalisée au moins pour deux pistes actives est particulièrement avantageuse car elle permet d'économiser du budget temps lorsque le radar est utilisé en poursuite active.

Malgré une perte sur le bilan d'énergie liée à la découpe de la fenêtre émission en sous-impulsions, cette technique reste particulièrement avantageuse par rapport aux techniques MIMO et d'émission colorée permettant de conserver le bilan complet de l'antenne (puissance émise et gains d'émission/réception).

Dans certains modes de réalisation, le procédé de fonctionnement tel qu'expliqué précédemment comprend en outre la mise en œuvre d'au moins une technique permettant de mieux séparer, lors de l'émission/réception des ondes communalisées, les échos des impulsions correspondant à des pointages de pistage actif différents et/ou de rejeter la considération de certains échos qui ne sont pas nécessaires ou sont ambigus en distance.

Selon une première technique, lors de la mise en œuvre de la n-ième récurrence de l'étape 110 et notamment lors de la sous-étape de l'émission 112, l'unité d'émission 22 choisit l'une des impulsions, par exemple la première impulsion et ajoute une phase aléatoire *ϕᵢₙ* à cette impulsion. Avantageusement, l'unité d'émission 22 ajoute une phase aléatoire différente *ϕᵢₙ* à chacune des impulsions. La ou chaque impulsion ayant une phase aléatoire *ϕᵢₙ* ajoutée est dite par la suite impulsion déphasée.

Il est à noter que le choix de l'impulsion à déphaser peut rester le même pour chaque récurrence de cette sous-étape 112. Autrement dit, lorsqu'une seule impulsion est déphasée lors de cette sous-étape, la même impulsion est déphasée dans chaque récurrence de cette étape. Lorsque les deux impulsions sont déphasées lors de cette sous-étape, ces impulsions sont également déphasées dans chaque récurrence de cette sous-étape.

Puis, lors de la sous-étape de réception 113, l'unité de réception 23 compense le déphasage des échos reçus dans la bande fréquentielle de la ou de chaque impulsion déphasée, par la phase aléatoire correspondante. Autrement dit, le déphasage s'effectue en faisant une soustraction de la valeur *ϕᵢₙ* dans la bande correspondant à l'indice i. Ce déphasage correspond au rang d'ambigüité en distance, connu, de la piste active. Avantageusement, le traitement de compensation de phase aléatoire associé au traitement Doppler est le filtrage adapté à tous les échos issus du même rang d'ambiguïté que la piste active. Cela permet de s'isoler avantageusement d'autres échos de cibles, voire de rejeter une partie du fouillis de sol ou de mer.

Ainsi, lors du traitement qui suit, seulement les échos correspondant au rang d'ambigüité de la piste active recherchée sont traités de manière cohérente. Le déphasage des autres échos ne peut pas se faire correctement de sorte qu'ils sont considérés se comportant comme des bruits blancs.

D'autres techniques pour obtenir une meilleure isolation des échos correspondant aux pointages de pistage actif différents lors de leur réception sont également possibles.

Ainsi, selon une deuxième technique utilisable, lors de la mise en œuvre de la n-ième récurrence de l'étape 110 et notamment lors de la sous-étape de l'émission 112, l'unité d'émission 22 met en œuvre des pentes différentes des chirps utilisés pour émettre les impulsions associées aux pointages de pistage actif différents. Autrement dit, lors de cette sous-étape 112, l'unité d'émission 22 émet les impulsions en utilisant soit une pente ascendante soit une pente descendante en fonction de la piste active associée à chaque impulsion. La même pente est alors utilisée pour toutes les impulsions de ce type dans toutes les récurrences de l'étape 110.

Par exemple, pour toutes les récurrences, une pente ascendante est choisie pour les impulsions associées à une piste active particulière et une pente descendante est choisie pour les impulsions associées à une autre piste active.

Puis, lors de la sous-étape de réception 113, l'unité de réception 23 reçoit des échos ayant des pentes fréquentielles différentes. Cette unité de réception 23 détermine donc les pentes reçues (en utilisant notamment des filtres adaptés) afin d'isoler les échos correspondant aux pointages de pistage actif différents

Selon une troisième technique utilisable et permettant d'obtenir également une meilleure isolation des échos correspondant aux pointages de pistage actif différents lors de leur réception, lors de la mise en œuvre de la n-ième récurrence de l'étape 110 et notamment lors de la sous-étape de l'émission 112, l'unité d'émission 22 met en œuvre des polarisations différentes des ondes utilisées pour émettre les impulsions associées aux pointages de pistage actif différents. Autrement dit, lors de cette sous-étape 112, l'unité d'émission 22 émet l'onde portant chaque impulsion avec une polarisation choisie en fonction de la piste active associée à cette impulsion. Cette même polarisation est choisie pour ce type d'impulsion pour toutes les récurrences de l'étape 110.

Par exemple, deux polarisations, à savoir une polarisation verticale et une polarisation horizontale peuvent être choisies pour les impulsions émises lors de la sous-étape 112. Selon d'autres exemples, une polarisation à 45° ou en circulaire peut être utilisée.

Puis, lors de la sous-étape de réception 113, l'unité de réception 23 reçoit des échos ayant des polarisations différentes. Cette unité de réception 23 détermine donc les polarisations des échos reçus (en utilisant notamment des filtres adaptés) afin d'isoler les échos correspondant aux pointages de pistage actif différents

Le principe qui vient d'être décrit peut être raffiné en utilisant plusieurs polarisations dans la même impulsion.

Dans un tel cas, chaque impulsion comporte une signature de polarisation spécifique. Une telle signature correspond à un code de polarisation.

Cette technique permet ainsi de colorer les différentes impulsions dans l'espace et d'obtenir une réjection supplémentaire de 20 à 30 dB.

Dans certains modes de réalisation, les techniques précitées sont combinées entre elles pour être mises en œuvre simultanément.

## Revendications

1. Procédé de fonctionnement d'un radar de détection (10) de cibles, le radar de détection (10) mettant en œuvre un balayage formant un cône de visibilité ;
le procédé comprenant les étapes suivantes :
- détermination (140) dans le cône de visibilité d'une pluralité de pistes actives, chaque piste active présentant une cible à poursuivre ;
- pour chaque piste active, détermination (150) d'une forme d'onde permettant sa détection et poursuite ;
- détermination (160) de compatibilité des pistes actives en comparant les formes d'onde déterminées pour ces pistes pour former au moins un ensemble de pistes actives compatibles, des pistes actives étant compatibles lorsqu'il existe une même forme d'onde utilisable pour la poursuite de chacune de ces pistes actives ;
- pour le ou chaque ensemble de pistes actives compatibles, émission/réception (110) d'une onde communalisée comprenant des impulsions consécutives, chaque impulsion étant associée à l'une des pistes actives dudit ensemble ;
dans lequel chaque n-ième récurrence de l'étape (110) d'émission/réception des ondes communalisées comprend les sous-étapes suivantes :
+ génération (111) d'au moins deux impulsions consécutives associées à des pistes actives différentes d'un même ensemble de pistes actives compatibles ;
+ émission (112) des impulsions dans des bandes fréquentielles différentes ;
+ réception (113) dans une fenêtre temporelle commune des échos des impulsions.

2. Procédé selon la revendication 1, comprenant en outre pour chaque piste active n'appartenant à aucun ensemble de pistes actives compatibles, émission/réception (110) d'une onde simple comprenant une seule impulsion.

3. Procédé selon l'une quelconque des revendications précédentes, dans lequel chaque forme d'onde définit un domaine de visibilité d'une onde ayant cette forme.

4. Procédé selon la revendication 3, dans lequel chaque domaine de visibilité comprend un domaine en distance et un domaine en vitesse d'une piste active.

5. Procédé selon la revendication 3 ou 4, dans lequel deux pistes actives sont compatibles lorsqu'elles se trouvent dans un même domaine de visibilité avec une probabilité supérieure à un seuil prédéterminé

6. Procédé selon l'une quelconque des revendications précédentes, dans lequel chaque forme d'onde est définie par une longueur d'onde, respectivement une fréquence d'émission, et une fréquence de répétition d'une onde ayant cette forme.

7. Procédé selon la revendication 6, dans lequel la compatibilité des pistes actives est vérifiée en testant différentes valeurs de longueur d'onde et/ou de fréquence de répétition.

8. Procédé selon l'une quelconque des revendications précédentes, dans lequel la compatibilité des pistes actives est déterminée pour chaque couple de pistes actives.

9. Procédé selon l'une quelconque des revendications précédentes, dans lequel les impulsions d'une même onde communalisée sont associées à des directions différentes d'émission.

10. Procédé selon l'une quelconque des revendications précédentes, dans lequel :
- chaque impulsion est émise avec une phase aléatoire associée à la bande fréquentielle correspondante ;
- la sous-étape de la réception (113) comprend la compensation du déphasage des échos reçus dans chaque bande fréquentielle, par la phase aléatoire associée à cette bande fréquentielle.

11. Procédé selon l'une quelconque des revendications précédentes, dans lequel :
- lors de la sous-étape d'émission (112), les impulsions correspondantes sont émises en utilisant des pentes différentes de chirps utilisés pour les émettre ;
- lors de la sous-étape de réception (113), des échos associés à des pointages de pistage actif différents sont distingués en déterminant les pentes des chirps correspondants.

12. Procédé selon l'une quelconque des revendications précédentes, dans lequel :
- lors de la sous-étape d'émission (112), les impulsions correspondantes sont émises en utilisant des polarisations différentes ;
- lors de la sous-étape de réception (113), des échos associés à des pointages de pistage actif différents sont distingués en déterminant leurs polarisations.

13. Procédé selon la revendication 12, dans lequel une polarisation est émise pour chaque impulsion ou un ensemble de polarisations formant une signature est émise pour chaque impulsion.

14. Radar (10) de détection de cibles comprenant des moyens techniques (21, 22, 23) configurés pour mettre en œuvre le procédé selon l'une quelconque des revendications précédentes.
